(19) **Europäisches Patentamt / European Patent Office / Office européen des brevets**

(11) **EP 4 585 432 A1**

(12) **EUROPEAN PATENT APPLICATION**
published in accordance with Art. 153(4) EPC

(43) Date of publication:
16.07.2025 Bulletin 2025/29

(21) Application number: 23862994.3

(22) Date of filing: 28.08.2023

(51) International Patent Classification (IPC):
$B60C\ 19/00\ ^{(2006.01)}$ $G06F\ 30/15\ ^{(2020.01)}$
$G06F\ 30/23\ ^{(2020.01)}$ $G06F\ 111/10\ ^{(2020.01)}$
$G06F\ 119/14\ ^{(2020.01)}$

(52) Cooperative Patent Classification (CPC):
B60C 19/00; G06F 30/15; G06F 30/23;
G06F 2111/10; G06F 2119/14

(86) International application number:
PCT/JP2023/030985

(87) International publication number:
WO 2024/053455 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.09.2022 JP 2022144096

(71) Applicant: **BRIDGESTONE CORPORATION**
Chuo-ku
Tokyo 104-8340 (JP)

(72) Inventor: **MINAKI, Hiroyuki**
Tokyo 104-8340 (JP)

(74) Representative: **Marks & Clerk LLP**
15 Fetter Lane
London EC4A 1BW (GB)

(54) **TIRE MODEL CREATION METHOD, TIRE MODEL CREATION DEVICE, AND TIRE MODEL CREATION PROGRAM**

(57) A tire model creation device includes: a modeling unit that separately models each of a case and a pattern representing the patterned tire, using a spline function; a surface joining unit that joins a surface of a case model, which is a model of the case, and a surface of a pattern model, which is a model of the pattern; a calculation point arrangement unit that arranges, relative to a join surface between the surface of the case model and the surface of the pattern model, a calculation point for calculating a restoring force of the join surface; and a restoring force calculation unit that calculates the restoring force based on the arranged calculation point.

FIG.3

EP 4 585 432 A1

**Description**

Technical Field

The present disclosure relates to a method of creating a tire model, a tire model creation device, and a tire model creation program.

Background Art

Conventionally, analysis of tire ground-contact behavior has been carried out using the finite element method (FEM) and other methods. In numerical analysis using FEM, a tire shape is created using computer aided design (CAD), after which element division is performed.

In addition, isogeometric analysis (IGA), a numerical analysis method that is an alternative to FEM, is known (see, for example, Non-Patent Document 1 (J. A. Cottrell, T. J. R. Hughes, and Y. Bazilevs, "Isogeometric Analysis Toward Integration of CAD and FEA", Wiley, 2009)). IGA is a method that is more compatible with CAD than FEM. When expressing the shape of an object, FEM expresses it with straight lines (linear basis functions), whereas IGA expresses it with spline functions. Further, Non-Patent Document 2 (Garcia, M. A., and Kaliske, M., "Isogeometric Analysis for Tire Simulation at Steady-State Rolling", Tire Science and Technology, TSTCA, Vol. 47, No. 3, July-September, pp. 174-195) discloses a technique for applying IGA to tire analysis.

Moreover, Patent Document 1 (Japanese Patent Application Laid-Open (JP-A) No. 2013-6491) discloses a method of using a spline function in a simulation for predicting a contact area of a tire with a road surface. The method generates a tire model by dividing the tire into a finite number of elements, divides nodes, which are the vertices of the elements on the outer circumferential surface of the tire model, into contact nodes included in the contact portion that contacts the road surface and non-contact nodes included in the non-contact portion that does not contact the road surface, and calculates the contact region using at least the position information of the non-contact nodes.

SUMMARY OF INVENTION

Technical Problem

Incidentally, in a numerical analysis using FEM, element division is performed after the tire shape is created by CAD, and therefore, the element division requires time and effort. Here, by using IGA, which is highly compatible with CAD, for tire numerical analysis instead of FEM, not only is the time and effort required for element division reduced, but the shape expressed in CAD can be analyzed as-is, and therefore, it is thought that this can improve the reproducibility of the tire shape and also improve analysis accuracy.

The above-mentioned Non-Patent Document 2 discloses a method of applying IGA to tire analysis, but does not mention the analysis of patterned tires. Further, the above-mentioned Patent Document 1 does not disclose a specific method for using the spline function in the simulation.

The present disclosure aims to provide a method of creating a tire model, a tire model creation device, and a tire model creation program with which, when creating a model of a patterned tire, the tire shape is highly reproducible, and analysis accuracy can be improved.

Means for Solving the Problem

Solution to Problem

In order to achieve the above-described aim, a first aspect is:
a method of creating a tire model for simulating the performance of a patterned tire, including:

separately modeling each of a case and a pattern representing the patterned tire, using a spline function;
joining a surface of a case model, which is a model of the case, and a surface of a pattern model, which is a model of the pattern;
arranging, relative to a join surface between the surface of the case model and the surface of the pattern model, a calculation point for calculating a restoring force of the join surface; and
calculating the restoring force based on the arranged calculation point.

A second aspect is the tire model creation method of the first aspect, in which a gap is present between the surface of the case model and the surface of the pattern model at a reference time.

A third aspect is the tire model creation method of the second aspect, in which the restoring force is calculated using variables representing a coefficient of the restoring force, a time increment, a shape function of the case model, a shape function of the pattern model, parametric coordinates of the calculation point, coordinates of a control point at a current time, coordinates of the control point at the reference time, an area of the join surface, and the gap.

A fourth aspect is the tire model creation method according to any one of the first to third aspects, in which the spline function is a T-spline function.

A fifth aspect is the tire model creation method according to any one of the first to third aspects, in which

    the case includes a membrane member,
    the spline function is a T-spline function, and
    the membrane member is modeled using the T-spline function.

A sixth aspect is a tire model creation device for simulating a performance of a patterned tire, the device including:

    a modeling unit that separately models each of a case and a pattern representing the patterned tire, using a spline function;
    a surface joining unit that joins a surface of a case model, which is a model of the case, and a surface of a pattern model, which is a model of the pattern;
    a calculation point arrangement unit that arranges, relative to a join surface between the surface of the case model and the surface of the pattern model, a calculation point for calculating a restoring force of the join surface; and
    a restoring force calculation unit that calculates the restoring force based on the arranged calculation point.

A seventh aspect is a tire model creation program for simulating a performance of a patterned tire, the program being for causing a computer to execute:

    separately modeling each of a case and a pattern representing the patterned tire, using a spline function;
    joining a surface of a case model, which is a model of the case, and a surface of a pattern model, which is a model of the pattern;
    arranging, relative to a join surface between the surface of the case model and the surface of the pattern model, a calculation point for calculating a restoring force of the join surface; and
    calculating the restoring force based on the arranged calculation point.

Effects of Invention

According to the present disclosure, when creating a model of a patterned tire, the tire shape is highly reproducible, and analysis accuracy can be improved.

BRIEF DESCRIPTION OF DRAWINGS

    Fig. 1 is a block diagram illustrating an example of the electrical configuration of a tire model creation device according to a first embodiment.
    Fig. 2 is a schematic cross-sectional view showing an example of the main members configuring a patterned tire according to an embodiment.
    Fig. 3 is a block diagram illustrating an example of the functional configuration of the tire model creation device according to the first embodiment.
    Fig. 4 is a diagram schematically illustrating an example of a case model and a pattern model according to an embodiment.
    Fig. 5 is a diagram for explaining tied contact modeling according to an embodiment.
    Fig. 6 is a flowchart showing an example of a processing flow of a tire model creation program according to the first embodiment.
    Fig. 7 is a diagram for explaining an analysis example of a case model and a pattern model.
    Fig. 8 is a diagram for explaining an analysis example of a case model and a pattern model.
    Fig. 9 is a diagram for explaining an analysis example of a case model and a pattern model.
    Fig. 10 is a diagram for explaining an analysis example of a case model and a pattern model.
    Fig. 11 is a diagram showing the contact pressure distribution results during rolling when the performance of a patterned tire is predicted using IGA analysis.

Fig. 12 is a diagram illustrating the difference between NURBS and T-splines.

Fig. 13 is a diagram showing an example of a tire cross-sectional internal shape created using T-splines.

Fig. 14 is a diagram showing the vicinity of a belt end where control points have been reduced using a T-spline.

Fig. 15 is a diagram showing an example of positions and weights of control points for expressing a perfect circle.

Fig. 16 is a diagram showing an example of a tire model developed in the circumferential direction.

Fig. 17 is a diagram showing an example of a tire model that has been refined and re-divided in the circumferential direction.

Fig. 18 is a diagram showing an example of a membrane member and a virtual solid.

Fig. 19 is a diagram showing a comparison example of the results of membrane analysis by IGA and FEM.

Fig. 20 is a diagram schematically showing a state in which control points are placed on a mesh boundary.

DESCRIPTION OF EMBODIMENTS

Embodiments realizing the technique of the present disclosure are described in detail hereinafter with reference to the drawings.

Here, there are cases in which the same reference numerals are appended to configuration elements and processing having mechanisms and functions that are responsible for the same operations in the respective diagrams, and duplicate explanation is appropriately omitted. Furthermore, the present disclosure is not limited to the following embodiments in any way, and can be implemented with appropriate modifications within the scope of the object of the present disclosure. In addition, in the present disclosure, while it is mainly the estimation of physical quantities for members that deform nonlinearly that is described, it goes without saying that the present invention can be applied to the estimation of physical quantities for linearly deforming members.

In each embodiment described below, "shape reproducibility" includes the reproduction of changes in shape over time. A "case" is also called a "base tire" and refers to the portion of the tire excluding the tread portion, and a "pattern" refers to the tread portion at which the tire tread pattern is formed. "FEM" is an abbreviation of finite element method, and "IGA" is an abbreviation of isogeometric analysis.

[First Embodiment]

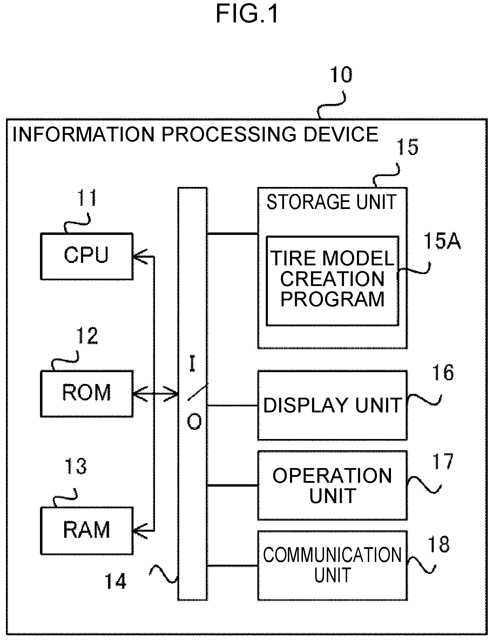

Fig. 1 is a block diagram illustrating an example of the electrical configuration of a tire model creation device 10 according to a first embodiment.

As shown in Fig. 1, the tire model creation device 10 according to the present embodiment includes a CPU (central processing unit) 11, a ROM (read-only memory) 12, a RAM (random access memory) 13, an input/output interface (I/O) 14, a storage unit 15, a display unit 16, an operation unit 17, and a communication unit 18. The tire model creation device 10 is implemented by a general-purpose computer such as a personal computer (PC) or a server computer.

The CPU 11, the ROM 12, the RAM 13, and the I/O 14 are connected to each other via a bus. Respective functional units, including the storage unit 15, the display unit 16, the operation unit 17, and the communication unit 18, are connected to the I/O 14. Each of these functional units is capable of two-way communication with the CPU 11 via the I/O 14.

The CPU 11, the ROM 12, the RAM 13, and the I/O 14 configure a control unit. The control unit may be configured as a sub-control unit that controls part of the operation of the tire model creation device 10, or may be configured as a part of a main control unit that controls the overall operation of the tire model creation device 10. For example, an integrated circuit, such as a large scale integration (LSI), or an IC chip set is used for configuring a part or all of the respective blocks of the control unit 31. A separate circuit or a partially or entirely integrated circuit may be used for configuring each of the blocks. The respective blocks may be provided integrated with each other, or some of the blocks may be separately provided. Further, a part of each of the blocks may be separately provided. A dedicated circuit or a general-purpose processor may be used for integrating the control unit, instead of an LSI.

Examples of the storage unit 15 include a hard disk drive (HDD), a solid state drive (SSD), a flash memory, and the like. The storage unit 15 stores a tire model creation program 15A for executing tire model creation processing according to the present embodiment. Here, the tire model creation program 15A may be stored in the ROM 12.

The tire model creation program 15A may be pre-installed in the tire model creation device 10, for example. The tire model creation program 15A may be realized by being stored on a non-volatile storage medium or distributed via a network, and appropriately installed in the tire model creation device 10. Here, examples of the non-volatile storage medium include a compact disc read-only memory (CD-ROM), a magneto-optical disk, an HDD, a digital versatile disc read-only memory (DVD-ROM), a flash memory, a memory card, and the like.

Examples of the display unit 16 include a liquid crystal display (LCD) or an organic electroluminescence (EL) display. The display unit 16 may be integrally provided with a touch panel. The operation unit 17 is provided with devices for operation input, such as a keyboard and a mouse. The display unit 16 and the operation unit 17 receive various instructions from a user of the tire model creation device 10. The display unit 16 displays various information such as the results of processing executed in response to instructions received from a user and notifications regarding the processing.

The communication unit 18 is connected to a network such as the Internet, a local area network (LAN), or a wide area network (WAN), for example, and communication with external devices is possible via a network.

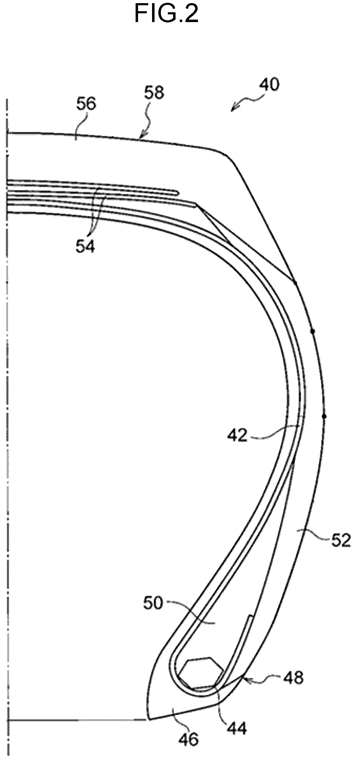

Fig. 2 is a schematic cross-sectional view showing an example of the main members configuring a patterned tire 40 according to the present embodiment.

As shown in Fig. 2, the patterned tire 40 has a carcass ply 42 for maintaining an internal pressure shape. The carcass ply 42 is made, for example, of organic fiber cords and forms the framework of the tire 40. The carcass ply 42 is also called a carcass or a ply, and hereinafter, the carcass ply 42 is referred to as ply 42.

The ply 42 is turned up by a bead core 44 for securing the patterned tire 40 to a rim (not shown). In the patterned tire 40, bead rubber 46 is disposed at an inner side in the tire radial direction relative to the bead core 44, as a result of which a bead portion 48 is formed at a tip portion on the inner side in the tire radial direction. In the patterned tire 40, a bead filler 50 that maintains the rigidity of the bead portion 48 is disposed within a triangular region formed by folding back the ply 42, and a side tread 52 is disposed at the outer side of the ply 42 to protect the ply 42. In addition, in the patterned tire 40, a belt 54 is disposed outward in the tire radial direction from the ply 42, and a tread 56 is disposed on the outer surface of the belt 54 in the tire radial direction. In this tread 56, a region in which a pattern (tread pattern) is formed configures a tread portion 58. Here, as an example of the patterned tire 40, a tubeless tire is used, and an inner liner (not shown) for maintaining airtightness under internal pressure is disposed inside the ply 42.

Incidentally, when performing numerical analysis of patterned tires, using IGA, which has high compatibility with CAD, instead of FEM, not only reduces the time and effort required for element division, but also makes it possible to analyze the shape expressed in CAD as-is, which is thought to improve the reproducibility of the tire shape and also enhance the analysis accuracy.

For this reason, the tire model creation device 10 according to the present embodiment simulates the performance of a patterned tire using IGA. Since, when modeling a patterned tire, it is difficult to model the case (base tire) and the pattern at the same time, when predicting the performance of a patterned tire, cases and patterns are modeled separately using spline functions and then joined (tied contact) when performing the analysis.

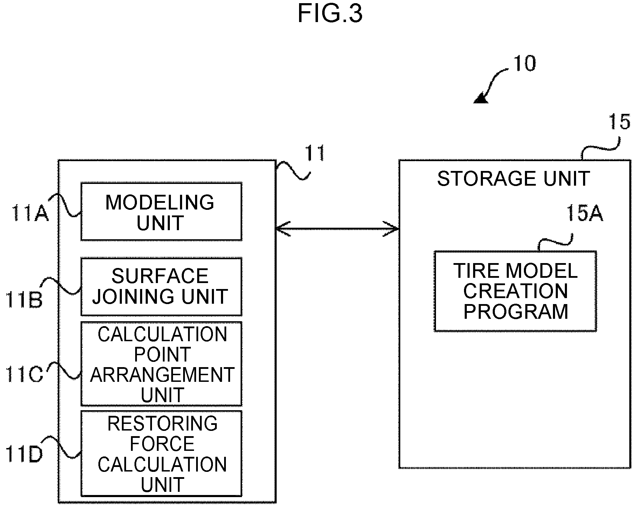

Specifically, the CPU 11 of the tire model creation device 10 according to the present embodiment functions as the respective units shown in Fig. 3 by the tire model creation program 15A stored in the ROM 12 or the storage unit 15 being written to the RAM 13 and executed.

Fig. 3 is a block diagram illustrating an example of the functional configuration of the tire model creation device 10 according to the first embodiment.

As shown in Fig. 3, the CPU 11 of the tire model creation device 10 according to the present embodiment functions as a modeling unit 11A, a surface joining unit 11B, a calculation point arrangement unit 11C, and a restoring force calculation unit 11D.

The modeling unit 11A separately models each of the case and the pattern representing the patterned tire using spline functions. While the spline function used for modeling is not particularly limited, Bezier curves, T-splines, B-splines, and the like are used, for example. A Bezier curve is an N-1 order curve obtained from N control points. A T-spline is a type of mathematical model used in generating freeform surfaces in computer graphics, and has T-shaped control points. A B-spline is a smooth curve defined from plural provided control points and knot vectors. Here, the case refers to the portion of the patterned tire 40 excluding the tread portion 58, and the pattern refers to the tread portion 58 at which the tread pattern is formed.

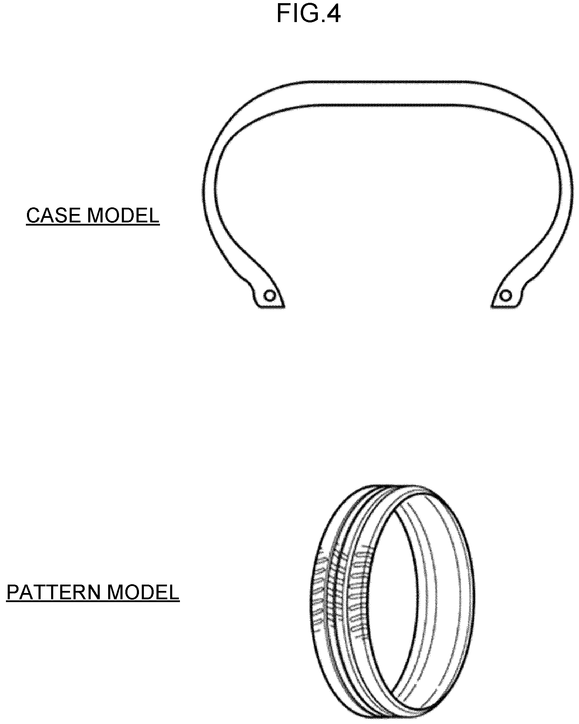

Fig. 4 is a diagram schematically illustrating an example of a case model and a pattern model according to the present embodiment.

The case model shown in Fig. 4 is a model of a portion of a patterned tire 40 excluding the tread portion 58, and the pattern model shown in Fig. 4 is a model of a tread portion 58 on which a tread pattern is formed.

The surface joining unit 11B joins (tied contact) the surface of the case model, which is a model of the case, with the surface of the pattern model, which is a model of the pattern, modeled by the modeling unit 11A.

The calculation point arrangement unit 11C arranges calculation points, for calculating the restoring force (tied contact force) of the join surface, at the join surface between the surface of the case model and the surface of the pattern model joined by the surface joining unit 11B.

The restoring force calculation unit 11D calculates the restoring force (tied contact force) based on the calculation points arranged by the calculation point arrangement unit 11C.

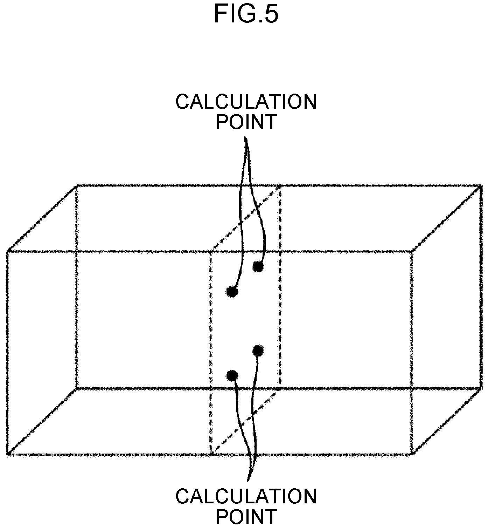

Next, referring to Fig. 5, tied contact modeling is explained in detail.

Fig. 5 is a diagram for explaining tied contact modeling according to the present embodiment.

While there are several methods of tied contact modeling, in the present embodiment, tied contact modeling was performed by introducing a restoring force (tied contact force) in a case in which respective surfaces separate or overlap. First, as shown in Fig. 5, calculation points for calculating the restoring force (tied contact force) are arranged at the join surface (tied contact surface).

For example, the restoring force (tied contact force) is calculated using the following formula. $f_g$ indicates the restoring force (tied contact force).

(1)

$$f_g = \frac{K}{\Delta t^2}\left(\sum_I N_1^I(r_1)\,x^I - \sum_I N_2^I(r_2)\,x^I - g_g\right)S$$

$$g_g = \sum_I N_1^I(r_1)\,X^I - \sum_I N_2^I(r_2)\,X^I$$

Here, K represents the coefficient of the restoring force (tied contact force), and $\Delta t$ represents the time increment. Further, $N_1$, $N_2$ represent the shape functions of object 1 and object 2, respectively, and $r_1$, $r_2$ denote the parametric coordinates of the calculation points of object 1 and object 2, respectively. Here, object 1 corresponds to a case model, for example, and object 2 corresponds to a pattern model, for example. In addition, x and X respectively indicate the coordinates of a control point at a current time and the coordinates of a control point at a reference time, and S indicates the area of the join surface (tied contact surface). Here, $g_g$ is a variable introduced to maintain the gap between surfaces when there is a gap between them at the reference time. Force $f_1$, $f_2$ at the control points of object 1 and object 2 are respectively calculated using the following formulas.

(2)

$$f_1^I = -N_1^I(r_1)f_g$$
$$f_2^I = N_2^I(r_2)f_g$$

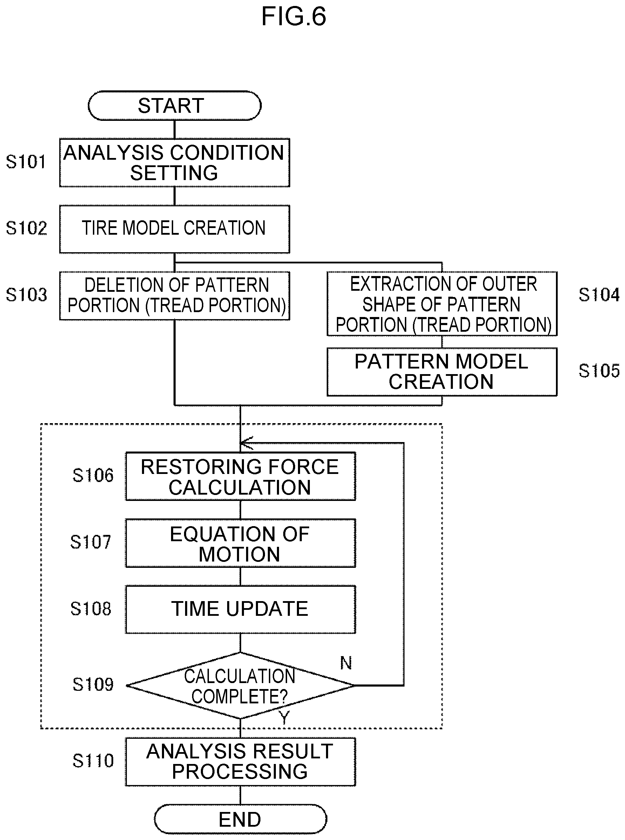

Next, the operation of the tire model creation device 10 according to the first embodiment is described with reference to Fig. 6.

Fig. 6 is a flowchart showing an example of a processing flow of a tire model creation program 15A according to the first embodiment.

When an instruction is given to execute processing according to the tire model creation program 15A, the CPU 11 of the tire model creation device 10 writes the tire model creation program 15A stored in the ROM 12 or the storage unit 15 into the RAM 13, whereby the tire model creation program 15A is executed.

In step S101 of Fig. 6, the CPU 11 receives settings for analysis conditions (for example, boundary conditions, initial conditions, and material settings).

In step S102, the CPU 11 creates a case model using a spline function. Here, the order of steps S101 and S 102 may be reversed.

In step S103, the CPU 11 deletes the pattern portion (tread portion) from the case model created in step S102.

Further, in step S104, the CPU 11 extracts the outer shape of the pattern portion (tread portion) from the case model created in step S102.

In step S105, the CPU 11 creates a pattern model using a spline function for the outer shape of the pattern portion (tread portion) extracted in step S104.

In step S106, the CPU 11 executes the IGA analysis, joins (tied contact) the surface of the case model created as discussed above with the surface of the pattern model and, with respect to the join surface (tied contact surface), arranges calculation points for calculating the restoring force (tied contact force), and as an example, using the above-mentioned formula (1), calculates the restoring force (tied contact force) based on the arranged calculation points.

In step S107, the CPU 11 calculates the following equation of motion from the restoring force calculated in step S106. The equation of motion is expressed as follows.

(3)

$$ma + F^{int} = F^{ext} - F^{tied}$$

Here, m is mass, a is acceleration, $F^{int}$ is the internal force, $F^{ext}$ is the external force, and $F^{tied}$ is the tied contact force.

In step S108, the CPU 11 updates the time.

In step S109, the CPU 11 determines or not whether the calculation is completed. If it is determined that the calculation is completed (if the determination is positive), the processing proceeds to step S110, and if it is determined that the calculation is not completed (if the determination is negative), the processing returns to step S106 and the processing is repeated.

In step S110, the CPU 11 processes the IGA analysis results, and ends the series of processing according to the tire model creation program 15A.

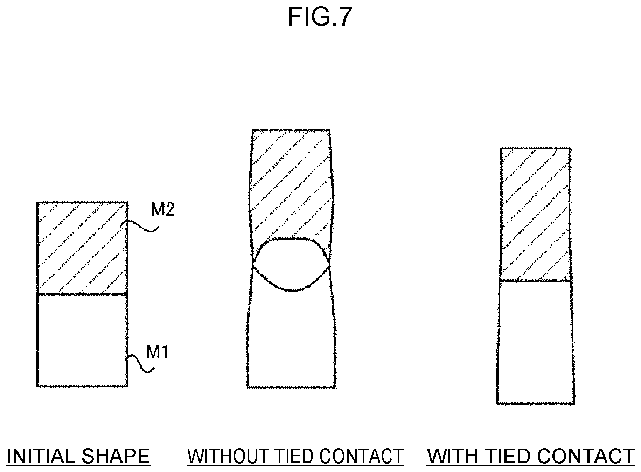

Next, an analysis example of a tensile analysis performed to verify the validity of the tire model according to the present embodiment is described with reference to Figs. 7 to 10.

Figs. 7 to 10 are diagrams for explaining analysis examples of a case model M1 and a pattern model M2.

As shown in Fig. 7, an object 1 representing a case and an object 2 representing a pattern are modeled separately as a case model M1 and a pattern model M2, and the mesh is not consistent at the join surface. Control points are only shared at edge parts. It can be seen that "without tied contact" these are separated, whereas "with tied contact" they are joined.

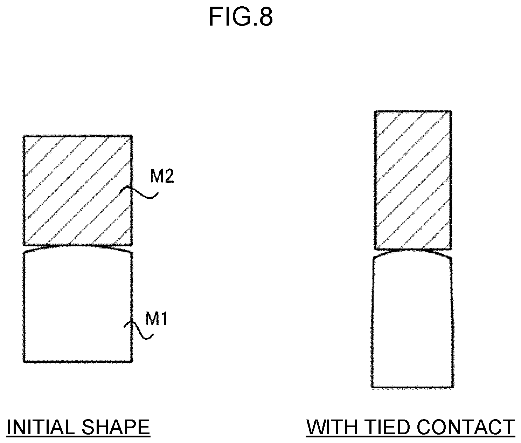

Fig. 8 shows the analysis results when there is a gap between the objects at the reference time. It can be seen that even if there is a gap between the case model M1 and the pattern model M2, the analysis can be performed without any problems.

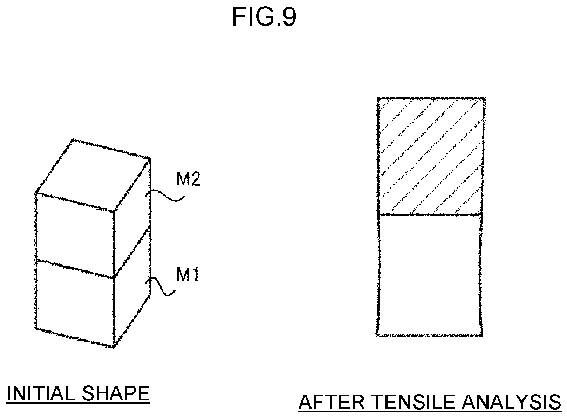

Further, three-dimensional analysis results are shown in Fig. 9. It can be seen that the joining between the surfaces of the case model M1 and the pattern model M2 can also be analyzed without any problems.

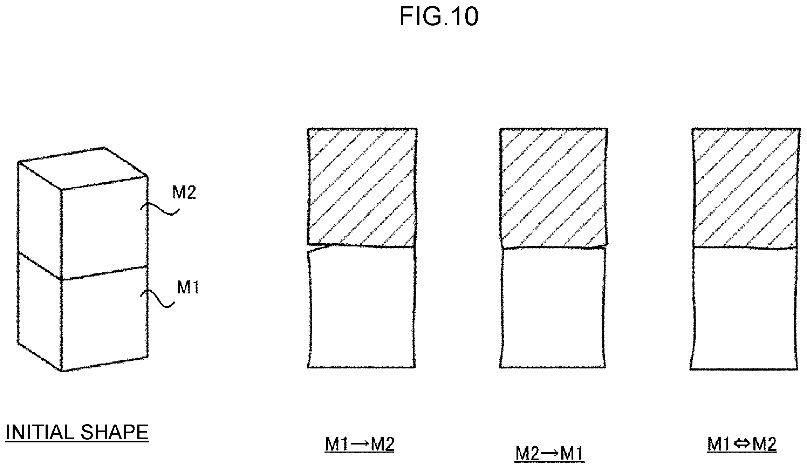

Further, as shown in Fig. 10, it can be understood that the restoring force (tied contact force) is not only defined from the case model M1 to the pattern model M2, or defined from the pattern model M2 to the case model M1, and by performing definition from the case model M1 to the pattern model M2 and definition from the pattern model M2 to the case model M1 simultaneously, stable analysis can be achieved.

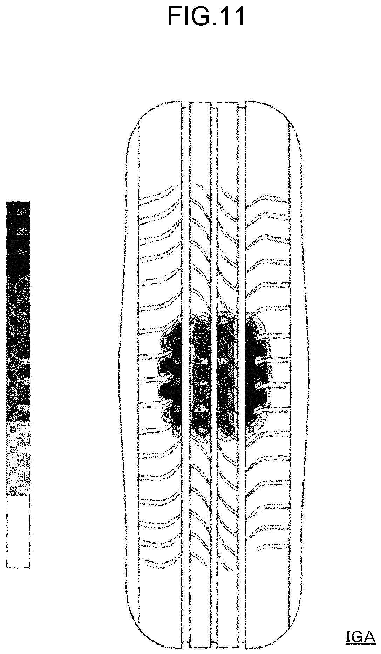

Fig. 11 is a diagram showing the contact pressure distribution results during rolling when the performance of a patterned tire is predicted using IGA analysis.

The example in Fig. 11 shows a case in which the case and pattern are modeled separately, and the surface of the case model and the surface of the pattern model are joined (tied contact). It is confirmed that a comparable ground pressure distribution is obtained in comparison with FEM.

Thus, according to the present embodiment, when creating a model of a patterned tire, by using IGA analysis, it is possible to achieve high shape reproducibility, including reproduction of changes in tire shape over time, and to improve analysis accuracy.

Further, compared to creating a tire model using FEM analysis, it is possible to create a tire model that has equal or better prediction performance, while reducing the time and labor required to complete the creation of the tire model.


[Second Embodiment]

In a second embodiment, an aspect in which a T-spline function is applied as a spline function used for modeling is described.

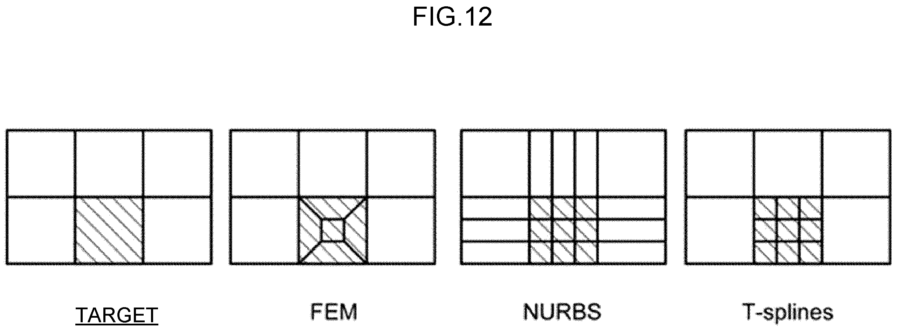

Fig. 12 is a diagram illustrating the difference between NURBS and T-splines.

IGA can handle various splines, such as Bezier curves and NURBS (non-uniform rational B-spline). Bezier curves and B-splines cannot precisely represent circles, whereas NURBS and T-splines can precisely represent circles. Further, as shown in Fig. 12, T-splines can reduce the number of control points compared to NURBS. IGA using T-splines is, for example, described in Y. Bazilevs et al., "Isogeometric analysis using T-splines," Computer Methods in Applied Mechanics and Engineering, Vol. 199, No. 5-8, pp. 229-263, 2010. For this reason, it can be said that IGA using T-splines is most suitable for tire analysis.

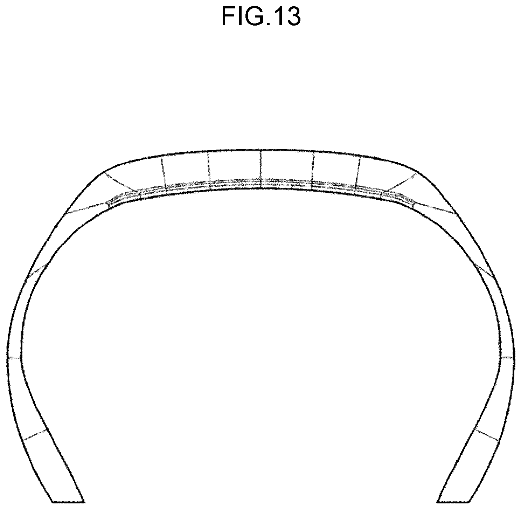

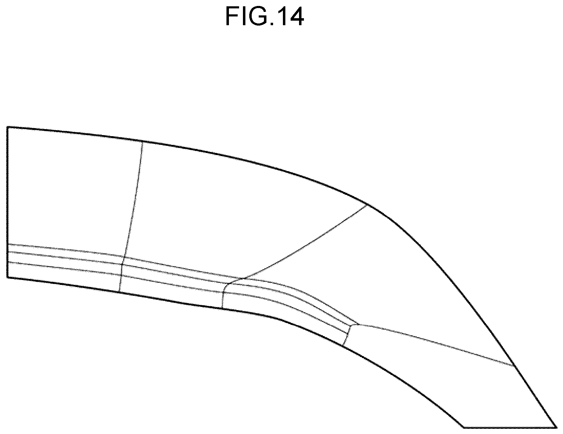

Fig. 13 is a diagram showing an example of a tire cross-sectional internal shape created using T-splines. Further, Fig. 14 is a diagram showing the vicinity of a belt end where control points have been reduced using a T-spline.

As shown in Figs. 13 and 14, a T-spline in a three-dimensional space is expressed by an R axis, an S axis, and a T axis, which are orthogonal to each other in a parametric space. The cross-sectional internal shape of the tire is created using T-splines in a two-dimensional space represented by the R axis and the S axis. By using T-splines instead of NURBS, the number of control points can be reduced, enabling efficient model creation and analysis.

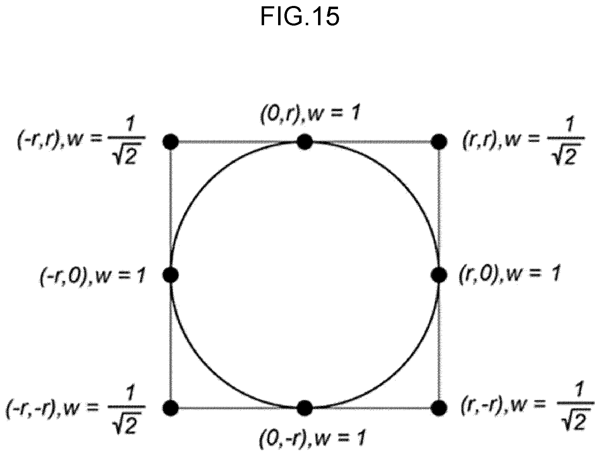

Fig. 15 is a diagram showing an example of positions and weights of control points for expressing a perfect circle.

As shown in Fig. 15, the cross-sectional inner shape mentioned above created in Figs. 13 and 14 is developed with the T-axis direction of the T-spline as the circumferential direction. The basis function in the T-axis direction is quadratic or higher. First, one circumference of the tire is divided into four regions: from 0 degrees to 90 degrees, from 90 degrees to 180 degrees, from 180 degrees to 270 degrees, and from 270 degrees to 360 degrees (=0 degrees). Here, the radius of the tire is r, and the weight of the control point is w. If the basis function is quadratic and C0 continuity is assumed at 0 degrees, 90 degrees, 180 degrees, and 270 degrees, then the knot vector in the T-axis direction is [0, 0, 0, 1, 1, 2, 2, 3, 3, 4, 4, 4]. Further, the weight (=w) of the control point of the T-spline can express a perfect circle by setting it to $1/\sqrt{2}$ at 45 degrees, 135 degrees, 225 degrees, and 315 degrees, and setting it to 1 at other angles.

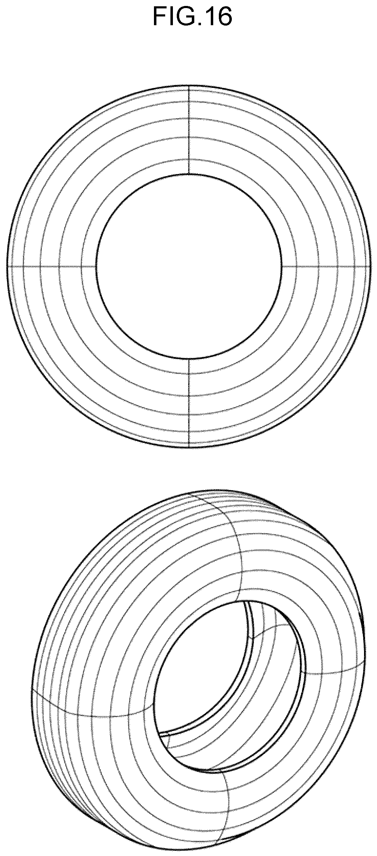

Fig. 16 is a diagram showing an example of a tire model developed in the circumferential direction.

As shown in Fig. 16, by setting the start point and end point to the same control point, it is possible to create a tire model for one circumference.

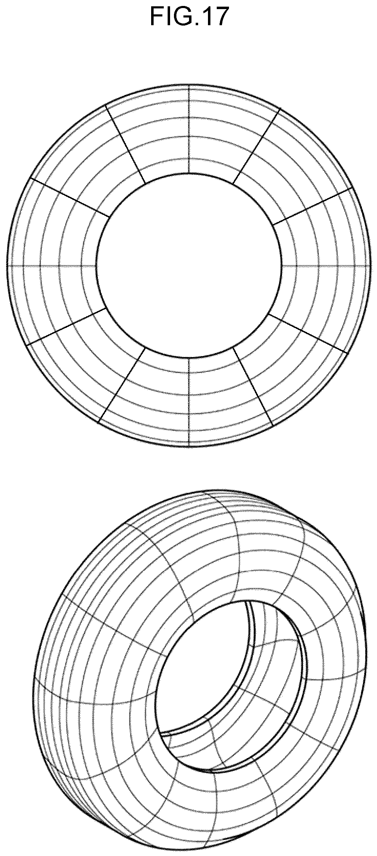

Fig. 17 is a diagram showing an example of a tire model that has been refined and re-divided in the circumferential direction.

In the example of Fig. 16 described above, there are cases in which the circumferential division is too coarse. For this reason, refinement of the T-spline may be performed to divide elements, as shown in Fig. 17. Refinement is a technique for subdividing a spline without changing its shape. For example, the above-mentioned Non-Patent Document 1 describes refinement of NURBS, and using a similar concept, it is possible to perform refinement of T-splines.

As described above, according to the present embodiment, by applying the T-spline function as the spline function used for modeling, the number of control points can be reduced as compared to NURBS. This allows for more efficient model creation and analysis.

[Third Embodiment]

In a third embodiment, a mode in which a membrane member (such as a ply or belt) configuring a tire is modeled using a T-spline function is described.

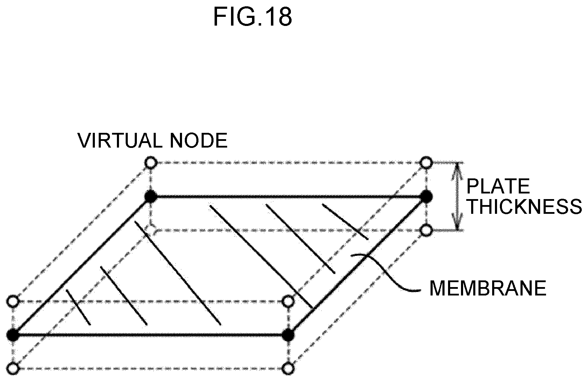

Fig. 18 is a diagram showing an example of a membrane member and a virtual solid. Further, the membrane member (also referred to as a "membrane" or "shell") referred to here includes the above-mentioned ply 42, belt 54, and the like.

Here, there are mainly two types of formulation for the membrane member. The first type (the former) is a method based on two-dimensional elements, which are processed two-dimensionally within the elements and mapped into three-dimensional space, and the second type (the latter) is based in three-dimensional space from the start. While the former is mainly used in modeling membrane components using IGA, the formulation is complicated. Therefore, in the present embodiment, the latter method is used; that is, a method in which, for the membrane member (shaded portion) shown in Fig. 18, by creating a virtual solid with virtual nodes that perturb each node to the extent of the plate thickness, the membrane member is modeled. Hereinafter, this method is referred to as a degeneration type formulation.

For example, a virtual solid is created by calculating normals at the control points that make up the T-spline and perturbing the control points. Here, a tangent vector t is calculated using the differentiation of the T-spline as shown in the following equations (4) to (6), and by calculating a normal vector n from the tangent vector t, the normal vector can be calculated with high accuracy.

$$(4)$$

$$\boldsymbol{t}_r(\boldsymbol{r}) = \left.\frac{\partial \boldsymbol{x}}{\partial r}\right|_r$$

$$= \sum_I \boldsymbol{x}^I \frac{\partial R^I(\boldsymbol{r})}{\partial r}$$

(5)

$$t_s(r) = \left.\frac{\partial \boldsymbol{x}}{\partial s}\right|_r$$

$$= \sum_I \boldsymbol{x}^I \frac{\partial R^I(\boldsymbol{r})}{\partial s}$$

(6)

$$n(r) = \frac{t_r(r) \times t_s(r)}{|t_r(r) \times t_s(r)|}$$

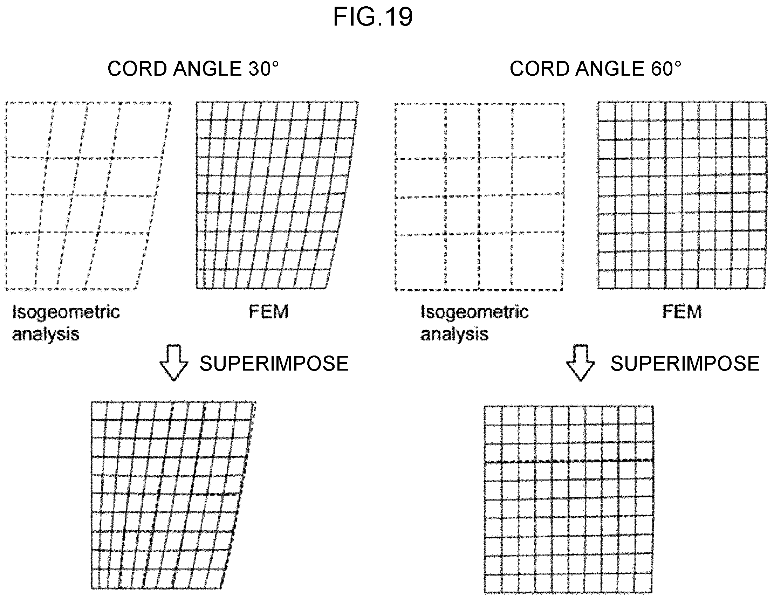

Here, r indicates the parametric coordinate, R indicates the coefficient for each control point of the T-spline, and x indicates the coordinate of the control point. Fig. 19 shows the results of a membrane tensile analysis performed using a membrane model created by this method.

Fig. 19 is a diagram showing a comparison example of the results of membrane analysis by IGA and FEM.

As shown in Fig. 19, for each of the "cord angle 30°" and "cord angle 60°", the membrane analysis by IGA yielded the same results as those by FEM.

Next, a method for embedding the T-spline of the membrane model into rubber (solid) is described. In order to perform tire analysis, it is necessary to embed membrane models such as the belt 54 and the ply 42 into a solid. For example, the following two methods can be considered for embedding in a solid.

(1) Embedding into T-spline boundaries

Since the control points lie on the T-spline boundary, it is possible to create a virtual T-spline solid without any problems.

(2) Embedding inside the T-spline (mesh boundary)

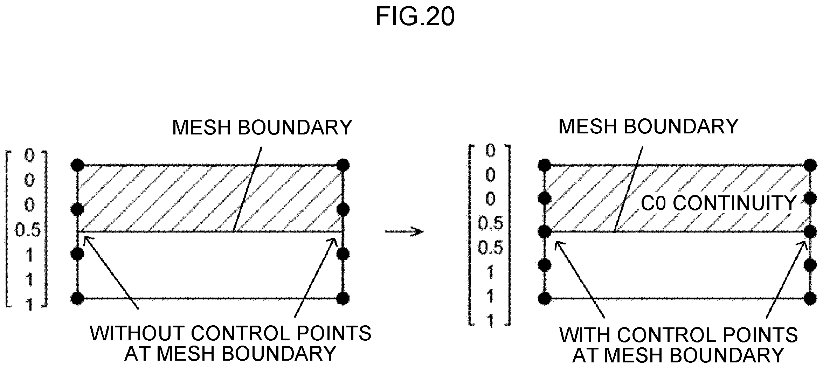

If the order of the T-spline is quadratic or higher, there are no control points on the mesh boundary. For this reason, it is not possible to create a virtual T-spline solid by perturbing the control points. Therefore, as shown in Fig. 20, the mesh boundary into which the membrane is to be embedded is arranged with control points at the mesh boundary by overlapping knots. This allows the membrane to be embedded at the mesh boundary.

Fig. 20 is a diagram schematically showing a state in which control points are arranged at a mesh boundary.

As shown in Fig. 20, if no control points are arranged at the mesh boundary, it is not possible to create a virtual T-spline solid by perturbing the control points. However, if control points are arranged at the mesh boundary by overlapping knots, a virtual T-spline solid can be created by perturbing the control points, enabling the embedding of a membrane at a mesh boundary.

In this way, according to the present embodiment, the membrane members (plies, belts, etc.) that configure a tire can be modeled using a T-spline function.

Furthermore, the technical scope of the present disclosure is not limited to the scope described in the foregoing embodiments. Various modifications or improvements can be made to the foregoing embodiments within a range that does not departing from the gist of the invention, and such modified or improved aspects are also included within the technical scope of the present disclosure.

[Contribution to the United Nations-led Sustainable Development Goals (SDGs)]

Sustainable development goals (SDGs) have been proposed with the aim of realizing a sustainable society. One embodiment of the present invention is thought to have potential as a technology that will contribute to initiatives such as "No. 9. Building the Foundations for Industry and Technological Innovation".

The disclosure of Japanese Patent Application No. 2022-144096 filed on September 9, 2022, is incorporated herein by reference in its entirety. All documents, patent applications, and technical standards described in the present specification are incorporated by reference in the present specification to the same extent as if the individual documents, patent applications, and technical standards were specifically and individually stated to be incorporated by reference.

**Claims**

1. A method of creating a tire model for simulating a performance of a patterned tire, the method comprising:

   separately modeling each of a case and a pattern representing the patterned tire, using a spline function;
   joining a surface of a case model, which is a model of the case, and a surface of a pattern model, which is a model of the pattern;
   arranging, relative to a join surface between the surface of the case model and the surface of the pattern model, a calculation point for calculating a restoring force of the join surface; and
   calculating the restoring force based on the arranged calculation point.

2. The method of creating a tire model of claim 1, wherein a gap is present between the surface of the case model and the surface of the pattern model at a reference time.

3. The method of creating a tire model of claim 2, wherein the restoring force is calculated using variables representing a coefficient of the restoring force, a time increment, a shape function of the case model, a shape function of the pattern model, parametric coordinates of the calculation point, coordinates of a control point at a current time, coordinates of the control point at the reference time, an area of the join surface, and the gap.

4. The method of creating a tire model of claim 1, wherein the spline function is a T-spline function.

5. The method of creating a tire model of claim 1, wherein:

   the case includes a membrane member,
   the spline function is a T-spline function, and
   the membrane member is modeled using the T-spline function.

6. A tire model creation device for simulating a performance of a patterned tire, the device comprising:

   a modeling unit that separately models each of a case and a pattern representing the patterned tire, using a spline function;
   a surface joining unit that joins a surface of a case model, which is a model of the case, and a surface of a pattern model, which is a model of the pattern;
   a calculation point arrangement unit that arranges, relative to a join surface between the surface of the case model and the surface of the pattern model, a calculation point for calculating a restoring force of the join surface; and
   a restoring force calculation unit that calculates the restoring force based on the arranged calculation point.

7. A tire model creation program for simulating a performance of a patterned tire, the program being for causing a computer to execute:

   separately modeling each of a case and a pattern representing the patterned tire, using a spline function;
   joining a surface of a case model, which is a model of the case, and a surface of a pattern model, which is a model of the pattern;
   arranging, relative to a join surface between the surface of the case model and the surface of the pattern model, a calculation point for calculating a restoring force of the join surface; and

calculating the restoring force based on the arranged calculation point.

FIG.1

10

INFORMATION PROCESSING DEVICE

15

STORAGE UNIT

11

CPU

TIRE MODEL
CREATION
PROGRAM

15A

12

ROM

I
/
O

DISPLAY UNIT

16

13

RAM

OPERATION
UNIT

17

14

COMMUNICATION
UNIT

18

# FIG.2

# FIG.3

# FIG.4

CASE MODEL

PATTERN MODEL

## FIG.5

CALCULATION
POINT

CALCULATION
POINT

# FIG.6

START

S101 | ANALYSIS CONDITION SETTING

S102 | TIRE MODEL CREATION

S103 | DELETION OF PATTERN PORTION (TREAD PORTION)

S104 | EXTRACTION OF OUTER SHAPE OF PATTERN PORTION (TREAD PORTION)

S105 | PATTERN MODEL CREATION

S106 | RESTORING FORCE CALCULATION

S107 | EQUATION OF MOTION

S108 | TIME UPDATE

S109 | CALCULATION COMPLETE? — N

Y

S110 | ANALYSIS RESULT PROCESSING

END

# FIG.7

M2

M1

INITIAL SHAPE    WITHOUT TIED CONTACT    WITH TIED CONTACT

# FIG.8

INITIAL SHAPE

WITH TIED CONTACT

# FIG.9

INITIAL SHAPE

AFTER TENSILE ANALYSIS

# FIG.10

INITIAL SHAPE

M2

M1

M1→M2

M2→M1

M1⇔M2

# FIG.11

IGA

# FIG.12

TARGET          FEM          NURBS          T-splines

# FIG.13

FIG.14

FIG.15

# FIG.16

## FIG.17

# FIG.18

VIRTUAL NODE

PLATE
THICKNESS

MEMBRANE

# FIG.19

CORD ANGLE 30°

CORD ANGLE 60°

Isogeometric
analysis

FEM

Isogeometric
analysis

FEM

SUPERIMPOSE

SUPERIMPOSE

EP 4 585 432 A1

EP 4 585 432 A1

## FIG.20

$\begin{bmatrix} 0 \\ 0 \\ 0 \\ 0.5 \\ 1 \\ 1 \\ 1 \end{bmatrix}$

MESH BOUNDARY

WITHOUT CONTROL POINTS
AT MESH BOUNDARY

$\begin{bmatrix} 0 \\ 0 \\ 0 \\ 0.5 \\ 0.5 \\ 1 \\ 1 \\ 1 \end{bmatrix}$

MESH BOUNDARY

C0 CONTINUITY

WITH CONTROL POINTS
AT MESH BOUNDARY

## INTERNATIONAL SEARCH REPORT

| International application No. |
|---|
| **PCT/JP2023/030985** |

**A.    CLASSIFICATION OF SUBJECT MATTER**

***B60C 19/00***(2006.01)i; ***G06F 30/15***(2020.01)i; ***G06F 30/23***(2020.01)i; *G06F 111/10*(2020.01)n; *G06F 119/14*(2020.01)n
FI:    B60C19/00 Z; G06F30/23; G06F30/15; G06F111:10; G06F119:14

According to International Patent Classification (IPC) or to both national classification and IPC

**B.    FIELDS SEARCHED**

Minimum documentation searched (classification system followed by classification symbols)

B60C19/00; G06F30/15; G06F30/23; G06F111/10; G06F119/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-41792 A (YOKOHAMA RUBBER CO LTD) 18 March 2021 (2021-03-18)<br>claims, fig. 1-6 | 1-7 |
| A | JP 2022-34854 A (YOKOHAMA RUBBER CO LTD) 04 March 2022 (2022-03-04)<br>claims, paragraph [0054], fig. 1-16 | 1-7 |
| A | JP 2020-201736 A (YOKOHAMA RUBBER CO LTD) 17 December 2020 (2020-12-17)<br>claims, paragraph [0063], fig. 1-11 | 1-7 |
| A | JP 2001-124667 A (BRIDGESTONE CORP) 11 May 2001 (2001-05-11)<br>claims, paragraph [0075], fig. 1-67 | 1-7 |
| A | JP 2002-257673 A (UNIV CHUO) 11 September 2002 (2002-09-11)<br>claims, paragraph [0022], fig. 1-17 | 1-7 |
| A | JP 2005-352819 A (YOKOHAMA RUBBER CO LTD) 22 December 2005 (2005-12-22)<br>claims, paragraph [0044], fig. 1-10 | 1-7 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **08 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/030985**

| Patent document cited in search report | | | Publication date (day/month/year) | Patent family member(s) | Publication date (day/month/year) |
|---|---|---|---|---|---|
| JP | 2021-41792 | A | 18 March 2021 | (Family: none) | |
| JP | 2022-34854 | A | 04 March 2022 | (Family: none) | |
| JP | 2020-201736 | A | 17 December 2020 | (Family: none) | |
| JP | 2001-124667 | A | 11 May 2001 | (Family: none) | |
| JP | 2002-257673 | A | 11 September 2002 | US 6574570 B1 | |
| JP | 2005-352819 | A | 22 December 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013006491 A

- JP 2022144096 A

**Non-patent literature cited in the description**

- **J. A. COTTRELL** ; **T. J. R. HUGHES** ; **Y. BAZILEVS**. Isogeometric Analysis Toward Integration of CAD and FEA. *Isogeometric Analysis Toward Integration of CAD and FEA*, 2009
- **GARCIA, M. A.** ; **KALISKE, M.** Isogeometric Analysis for Tire Simulation at Steady-State Rolling. *Tire Science and Technology, TSTCA*, vol. 47 (3), 174-195

- **Y. BAZILEVS et al.** Isogeometric analysis using T-splines. *Computer Methods in Applied Mechanics and Engineering*, 2010, vol. 199 (5-8), 229-263